# EUROPEAN PATENT APPLICATION

(11) **EP 3 502 990 A1**
(43) Date of publication of application: **26.06.2019**
(21) Application number: 17840957.9
(22) Date of filing: 04.08.2017
(51) Int. Cl.: G06Q 20/10, G06Q 20/22

(54) **METHOD AND DEVICE FOR DETECTING FUND TRANSACTION ROUTE IN ELECTRONIC PAYMENT PROCESS**

(30) Priority: 18.08.2016 CN 201610686134
(71) Applicant: Alibaba Group Holding Limited, Grand Cayman (KY)
(72) Inventor: TONG, Jun, Zhejiang 311121 (CN)
(74) Representative: Branderhorst, Matthijs Pieter Arie
(86) International application number: PCT/CN2017/095919
(87) International publication number: WO 2018/032982

(57) **Abstract**

Provided are a method and a device for detecting a fund transaction route in an electronic payment process. The method comprises: generating an actual route code for a fund transaction based on a fund transaction identifier, the actual route code being used to represent an actual transaction route of fund in the fund transaction; obtaining a standard route code corresponding to the fund transaction identifier; and when the actual route code is identical to the standard route code, confirming correctness of the transaction route of the fund transaction. By generating an actual route code for representing an actual transaction route for a fund transaction process based on a fund transaction identifier and determining whether the fund transaction route is consistent with a preset route by comparing the actual route code with a standard route code, timely interventions can be taken when the routes are inconsistent so as to reduce financial losses to a user caused by inconsistency in the actual transaction route and to enhance the user experience.

## Description

The present application claims priority from a Chinese patent application with application number 201610686134.2 and invention title "Method and Device for Detecting Fund Transaction Route in Electronic Payment Process" filed on August 18, 2016, the entirety of which is hereby incorporated by reference into this application.

### Technical Field

The present application relates to the technical field of the Internet, particularly to a method and apparatus for detecting fund transaction links in an electronic payment process.

### Background Technologies

With the rapid development of Internet technology, electronic payment is favored by users owing to its advantages of convenience and swiftness. In related technologies, the fund circulation in an electronic payment process is often complex. Taking the purchase of a fund product for example, in a preset fund plan, in order to complete this purchase operation, fund may need to go through transactions of four or five accounts in the background. In case the actual transaction sequence of fund is different from the design, the user may suffer financial losses.

### Summary

For this purpose, the present application provides a method and apparatus for detecting a fund transaction route in an electronic payment process.

For example, the present application is achieved through the following technical solution:
a method for detecting a fund transaction route in an electronic payment process, comprising:
generating an actual route code for a fund transaction based on a fund transaction identifier, the actual route code being used to represent an actual transaction route of fund in the fund transaction,
obtaining a standard route code corresponding to the fund transaction identifier,
when the actual route code is identical to the standard route code, confirming correctness of the transaction route of the fund transaction.

Optionally, the generating an actual route code for a fund transaction based on a fund transaction identifier comprises:
obtaining, based on the fund transaction identifier, from a corresponding database, actual transaction information of fund in the fund transaction, the actual transaction information including: transaction accounts and a transaction sequence,
obtaining account codes corresponding to the transaction accounts,
based on the transaction sequence, combining the account codes of the transaction accounts to generate the actual route code.

Optionally, the obtaining an account code corresponding to the transaction account comprises:
obtaining a type code of the transaction account,
when the type code is a first type code, determining that the account code corresponding to the transaction account is a combination of the type code and the account ID of the transaction account,
when the type code is a second type code, determining that the account code corresponding to the transaction account is the type code.

Optionally, the obtaining a standard route code corresponding to the fund transaction identifier comprises:
obtaining a transaction code corresponding to the fund transaction identifier,
obtaining a standard route code corresponding to the transaction code.
Optionally, the fund transaction identifier is a transaction serial number.

An apparatus for detecting a fund transaction route in an electronic payment process, comprising:
a code generation unit that generates an actual route code for a fund transaction based on a fund transaction identifier, the actual route code being used to represent an actual transaction route of fund in the fund transaction,
a standard obtaining unit that obtains a standard route code corresponding to the fund transaction identifier,
a route confirmation unit that, when the actual route code is identical to the standard route code, confirms correctness of the transaction route of the fund transaction.

Optionally, the code generation unit comprises:
a first obtaining subunit that obtains actual transaction information of fund in the fund transaction process based on the fund transaction identifier from a corresponding database, the actual transaction information including: transaction accounts and a transaction sequence,
a second obtaining subunit that obtains account codes corresponding to the transaction accounts,
a code generation subunit that combines the account codes of the transaction accounts based on the transaction sequence to generate the actual route code.

Optionally, the second obtaining subunit obtains a type code of the transaction account; when the type code is a first type code, determines that the account code corresponding to the transaction account is a combination of the type code and the account ID of the transaction account; when the type code is a second type code, determines that the account code corresponding to the transaction account is the type code.

Optionally, the standard obtaining unit obtains a transaction code corresponding to the fund transaction identifier, and obtains a standard route code corresponding to the transaction code.

Optionally, the fund transaction identifier is a transaction serial number.

From the foregoing description, it may be seen that the present application may generate an actual route code of an actual transaction route for representing the fund transaction process based on a fund transaction identifier, and determine whether the fund transaction route is consistent with the preset route by comparing the actual route code with the standard route code, thus timely interventions can be taken when the routes are inconsistent so as to reduce the financial losses to a user caused by the inconsistence in the actual transaction route and to enhance the user experience.

### Brief Description of the Drawings

FIG. 1 is a flow chart of a method for detecting a fund transaction route in an electronic payment process according to an exemplary embodiment of the present application.
FIG. 2 is a flow chart of generating an actual route code for a fund transaction according to an exemplary embodiment of the present application.
FIG. 3 is a structural diagram of an apparatus for detecting a fund transaction route in an electronic payment process according to an exemplary embodiment of the present application.
FIG. 4 is a block diagram of an apparatus for detecting a fund transaction route in an electronic payment process according to an exemplary embodiment of the present application.

### Detailed Description

Here, exemplary embodiments will be described in detail, with examples shown in the accompanying drawings. When the description below involves accompanying drawings, unless otherwise expressed, a same number in different accompanying drawings stands for the same or similar element. The implementation manners described in the following exemplary embodiments do not represent all the implementation manners consistent with the present application. Conversely, they are only examples of the apparatus and method described in detail in the attached claims and consistent with some aspects of the present application.

The terms used in the present application are only for the purpose of describing specific embodiments and not intended to limit the present application. The singular forms "one," "a," "an," "the" and "this" used in the present application and in the attached claims also are intended to cover plural forms unless the context clearly indicates otherwise. It should also be understood that the term "and/or" used in the text refers to any possible combination containing any one or a plurality of the listed items.

It should be understood that although the present application might use terms such as first, second and third to describe various kinds of information, the information should not be limited to these terms. These terms are only intended to differentiate information of a same type. For example, without departing from the scope of the present application, first information may also be referred to as second information, and similarly, second information may also be referred to as first information. Subject to the context, term "if' used here may be interpreted as "at the time of...", or "when ....", or "in response to determination."

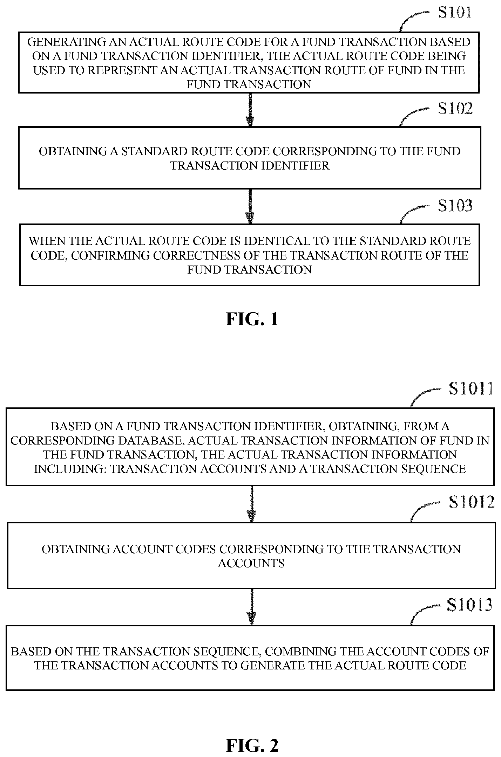

FIG. 1 is a flow chart of a method for detecting a fund transaction route in an electronic payment process according to an exemplary embodiment of the present application.

Please refer to FIG. 1. The method for detecting a fund transaction route in an electronic payment process may be applied on a server of a financial system and comprises the following steps:
Step 101, generating an actual route code for a fund transaction based on a fund transaction identifier, the actual route code being used to represent an actual transaction route of fund in the fund transaction process.

In this embodiment, the fund transaction identifier typically is the serial number of an electronic payment transaction. When a user initiates an electronic payment transaction, a server responsible for generation of a fund transaction identifier will generate for this electronic payment transaction a serial number that can uniquely identify this electronic payment transaction. If, for example, the electronic payment transaction is purchase of a fund product, after a server receives a fund product purchase request initiated by a user, it will generate a unique serial number for this request. The fund transaction is a transaction process of the fund paid by the user among various types of accounts in the background in the process of achieving fund product purchase. The generated serial number will be carried throughout the fund transaction process.

In this embodiment, the server may, after completion of this electronic payment transaction, generate an actual route code for the fund transaction in this electronic payment process based on a fund transaction identifier. Here, the actual route code is used to represent an actual transaction route of fund in the fund transaction process. In this embodiment, the accounts through which funds flow in the fund transaction process may be considered as nodes in the fund transaction route. In this way, the fund transaction route typically may be represented as: account A → account B → account number C.

In this embodiment, referring to FIG. 2, the server may generate an actual route code for a fund transaction by the following step:
Step 1011, based on the fund transaction identifier, obtaining actual transaction information of funds in the fund transaction process from a corresponding database, the actual transaction information including: transaction accounts and a transaction sequence.

In this embodiment, if, for example, the fund transaction identifier is a serial number, the server may, based on the serial number of an electronic payment transaction, obtain actual transaction information of this fund transaction from a database storing transaction information. Here, the actual transaction information includes: transaction account and transaction sequence. In actual application, the actual transaction information of this fund transaction might be stored in a data table of a database or might be stored in a plurality of data tables of a database or might be stored in a plurality of databases. The present application has no limitation to it.

For example, supposing the serial number is 201607150012, then based on this serial number, the server may obtain the following information from a related database: the transaction fund is RMB 10,000, and the RMB 10,000 is transferred from a user's balance account (account ID: 123456) to an internal account for fund product to be purchased (account ID: 777777), then is transferred from the internal account for fund product to be purchased to an account for unconfirmed sale of funds (account ID: 888888), and then is transferred from this account for unconfirmed sale of funds to an account for payable fund purchase (account ID: 999999). From the information, four transaction accounts corresponding to serial number 201607150012 may be obtained. For details, please refer to Table 1. The transaction sequence is 1 → 2 → 3 → 4.

**Table 1**

| No. | Account type | Account ID |
|---|---|---|
| 1 | User's balance account | 123456 |
| 2 | Internal account for fund product to be purchased | 777777 |
| 3 | Account for unconfirmed sale of funds | 888888 |
| 4 | Account for payable funds purchase | 999999 |

Step 1012, obtaining account codes corresponding to the transaction accounts.

Based on the foregoing Step 1011, after all the transaction accounts involved in this fund transaction process are obtained, the account code of every transaction account may be obtained separately.

In this embodiment, the server may initially obtain the type code of every transaction account. Here, the type codes typically are set by developers in advance. Please continue to refer to Table 1. The developers may set the account code of type "user's balance accounts" as KZ001. It may be understood that the type codes of all user's balance accounts are KZ001 no matter what the account IDs. Likewise, the developers may also set type codes for other types of accounts.

**Table 2**

| No. | Account type | Account ID | Type code |
|---|---|---|---|
| 1 | User's balance account | 123456 | KZ001 |
| 2 | Internal account for fund product to be purchased | 777777 | JN001 |
| 3 | Account for unconfirmed sale of fund | 888888 | JS001 |
| 4 | Account for payable fund purchase | 999999 | YS001 |

In an example, please refer to Table 2. If, for example, the type codes of all types of transaction accounts are as shown in Table 2. After the type code of each transaction account is obtained, a code group to which each type code belongs may be determined in turn, and the account codes corresponding to transaction accounts are determined according to the account code rules set for each group. For example, the developers may classify account types into two groups according to the attributes of the transaction accounts under each account type: the first type of accounts and the second type of accounts. Here, the type codes of the transaction accounts in the first type of accounts are first type codes, and the transaction accounts in the first type of accounts are fixed, i.e., generally speaking in the first type of accounts, typically there is only one transaction account. Then this type of account code rule may be set as a combination of type code and account ID. The type codes of the transaction accounts in the second type of accounts are second type codes, and the transaction accounts in the second type of accounts are not fixed, i.e., in the second type of accounts, typically there are a plurality of transaction accounts. Then this type of account code rule may be set as a type code.

Still taking Table 2 for example, suppose type "user's balance accounts" are the second type of accounts, and types "internal accounts for fund product to be purchased", "accounts for unconfirmed sale of funds" and "accounts for payable fund purchase" are the first type of accounts. According to the foregoing account code rule, please refer to Table 3, it may be determined that the account code of transaction account "123456" is KZ001, the account code of transaction account "777777" is JN001777777, the rest may be deduced by analogy.

**Table 3**

| No. | Account type | Account ID | Type code | Account code |
|---|---|---|---|---|
| 1 | User's balance account | 123456 | KZ001 | KZ001 |
| 2 | Internal account for fund product to be purchased | 777777 | JN001 | JN001777777 |
| 3 | Account for unconfirmed sale of fund | 888888 | JS001 | JS001888888 |
| 4 | Account for payable fund purchase | 999999 | YS001 | YS001999999 |

It should be noted that in actual application, the developers may directly set a type code group to which each type code belongs, and an account code rule corresponding to each type code group. In this step, the server does not need to identify account type and may determine a corresponding account code based on the type code and the account code rule. The present application has no limitation to it.

Step 1013, combining the account codes of the transaction accounts based on the transaction sequence to generate the actual route code.

Based on the foregoing Step 1012, after the account code corresponding to each transaction account is obtained, the account codes may be combined in turn based on the transaction sequence obtained in the foregoing Step 1011 to generate the actual route code.

Still taking Table 3 for example, the account codes of the transaction accounts may be combined to obtain the following actual route code: KZ001 JN001777777 JS001888888 YS001999999.

Step 102, obtaining a standard route code corresponding to the fund transaction identifier.

In this embodiment, the server may also obtain a corresponding standard route code based on the fund transaction identifier. The standard route code is a route code generated according to a fund plan designed in advance (fund transaction route).

In this embodiment, for different fund transaction routes, the developers may set corresponding standard route codes respectively in advance. Simply, the developers may set different transaction codes for different fund plans first and then store the generated standard route codes in association with their transaction codes. When a serial number is generated, alternatively, the generated serial number may be stored in association with a corresponding transaction code. In this step, the server may obtain a transaction code corresponding to the serial number at first and then obtain a corresponding standard route code based on the obtained transaction code.

It should be noted that, in this embodiment, Step 101 may proceed first, then Step 102, or Step 102 may proceed first, then Step 101, or parallel threads may be adopted to process Steps 101 and 102 simultaneously. The present application has no limitation to it.

Step 103, confirming correctness of the transaction route of the fund transaction when the actual route code is the identical to the standard route code.

Based on the foregoing Steps 101 and 102, after an actual route code is generated and a standard route code is obtained, the actual route code and the standard route code may be compared. When they are the same, it may be determined that the transaction route of this fund transaction is correct and is a transaction route designed in advance. If the actual route code and the standard route code are not the same, it may be determined that the transaction route of this fund transaction is not the transaction route designed in advance. This may cause financial losses to the user, and subsequently relevant processing operations may be executed, for example: returning a notification of transaction failure to the user and rolling back all the operations of this transaction. The present application has no limitation to it.

Still taking Table 3 as an example, supposing the preset transaction route for an electronic payment transaction of fund product purchase is: user's balance account →internal account for fund product to be purchased →account for unconfirmed sale of funds →account for payable funds purchase, i.e., the standard route code is KZ001 JN001777777 JS001888888 YS001999999, then, in this step, it is determined that this standard route code is identical to the actual route code generated in the foregoing Step 101 and subsequently determined that the transaction route of this fund transaction is correct.

In another example, supposing the actual route of this fund transaction is: user's balance account →account for unconfirmed sale of funds →internal account for fund product to be purchased →account for payable funds purchase, then the actual route code generated in the foregoing Step 101 is KZ001 JS001888888 JN001777777 YS001999999. Through comparison, it is found that this actual route code is different from the standard route code and subsequently determined that the transaction route of this fund transaction is inconsistent with the preset route.

From the foregoing description, it can be seen that the present application may generate an actual route code of an actual transaction route for representing the fund transaction process based on a fund transaction identifier, and determine whether the fund transaction route is consistent with the preset route by comparing the actual route code with a standard route code, thus timely interventions can be taken when the routes are inconsistent so as to reduce the financial losses to a user caused by inconsistency in the actual transaction route and to enhance the user experience.

In correspondence to the embodiment of the foregoing method for detecting a fund transaction route in an electronic payment process, the present application further provides an embodiment of an apparatus for detecting a fund transaction route in an electronic payment process.

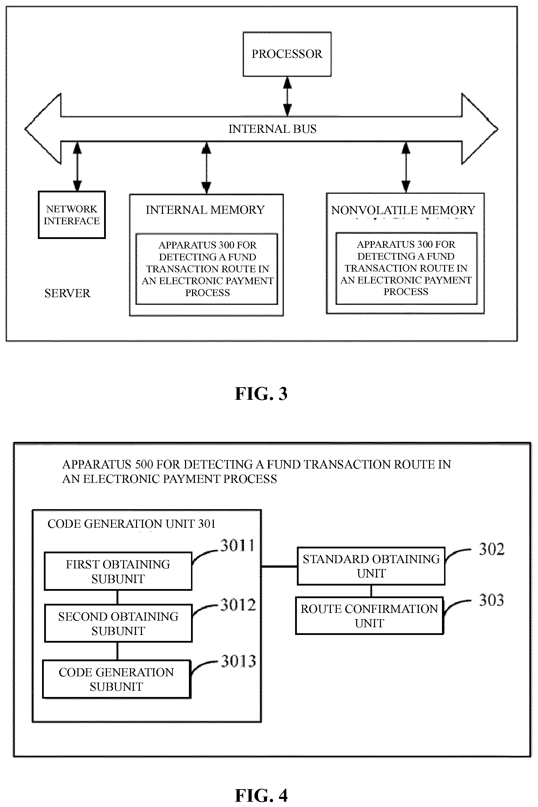

The embodiment of an apparatus for detecting a fund transaction route in an electronic payment process provided by the present application may be applied on a server of a financial system. The apparatus embodiment may be achieved by software or hardware, or by a combination of hardware and software. Taking software for example, an apparatus in a logical sense is formed in a way that a processor of a server on which the apparatus is located reads corresponding computer program instructions in a nonvolatile memory to an internal memory for operation. In terms of hardware, as shown in FIG. 3, which is a hardware structural diagram of a server on which the apparatus for detecting a fund transaction route in an electronic payment process is located. In addition to a processor, an internal memory, a network interface and a nonvolatile memory as shown in FIG. 3, the server on which the apparatus in the embodiment is located typically may also comprise other hardware according to the actual functions of the server. Unnecessary details will not be provided here.

FIG. 4 is a block diagram of an apparatus for detecting a fund transaction route in an electronic payment process according to an exemplary embodiment of the present application.

Please refer to FIG. 4, the apparatus 300 for detecting a fund transaction route in an electronic payment process may be applied on the server as shown in the foregoing FIG. 3, and comprise: a code generation unit 301, a standard obtaining unit 302 and a route confirmation unit 303. Here, the code generation unit 301 may further comprise: a first obtaining subunit 3011, a second obtaining subunit 3012 and a code generation subunit 3013.

Here, the code generation unit 301 generates an actual route code for a fund transaction based on a fund transaction identifier, the actual route code being used to represent an actual transaction route of fund in the fund transaction process;
the standard obtaining unit 302 obtains a standard route code corresponding to the fund transaction identifier;
the route confirmation unit 303, when the actual route code is the identical to the standard route code, confirms correctness of the transaction route of the fund transaction.
the first obtaining subunit 3011, based on the fund transaction identifier, obtains, from a corresponding database, actual transaction information of fund in the fund transaction process, the actual transaction information including: transaction accounts and a transaction sequence,
the second obtaining subunit 3012, obtains account codes corresponding to the transaction accounts,
the code generation subunit 3013, based on the transaction sequence, combines the account codes of the transaction accounts to generate the actual route code.

Optionally, the second obtaining subunit 3012 obtains a type code of the transaction account; when the type code is a first type code, determines that the account code corresponding to the transaction account is a combination of the type code and the account ID of the transaction account; when the type code is a second type code, determines that the account code corresponding to the transaction account is the type code.

Optionally, the standard obtaining unit 302 obtains a transaction code corresponding to the fund transaction identifier and obtains a standard route code corresponding to the transaction code.

Optionally, the fund transaction identifier is a transaction serial number.

The processes of achieving the functions and effects of every unit in the foregoing apparatus are detailed in the implementation processes of corresponding steps in the foregoing method, so unnecessary details will not be repeated.

For the apparatus embodiment, it generally corresponds to the method embodiment, so for relevant parts of the apparatus, please refer to the corresponding parts of the method embodiment. The apparatus embodiment described above is exemplary only, its units described as separate components may or may not be physically separate, and the components displayed as units may or may not be physical units, i.e., they may be located in a same place, or distributed on a plurality of network units. Some or all of the modules may be selected according to the actual need to achieve the objectives of the solution of the present application. Those of ordinary skill in the art can understand and implement it without creative effort.

The foregoing descriptions are preferred embodiments of the present application and are not intended to limit the present application. All modifications, equivalent replacements and improvements made without departing from the spirit and principle of the present application shall fall within the scope of the present application.

## Claims

1. A method for detecting a fund transaction route in an electronic payment process, wherein the method comprises:
generating an actual route code for a fund transaction based on a fund transaction identifier, the actual route code being used to represent an actual transaction route of fund in the fund transaction;
obtaining a standard route code corresponding to the fund transaction identifier;
when the actual route code is identical to the standard route code, confirming correctness of the transaction route of the fund transaction.

2. The method according to claim 1, wherein the generating an actual route code for a fund transaction based on a fund transaction identifier comprises:
based on the fund transaction identifier, obtaining, from a corresponding database, actual transaction information of fund in the fund transaction, the actual transaction information including: transaction accounts and a transaction sequence;
obtaining account codes corresponding to the transaction accounts;
based on the transaction sequence, combining the account codes of the transaction accounts to generate the actual route code.

3. The method according to claim 2, wherein the obtaining an account code corresponding to a transaction account comprises:
obtaining a type code of the transaction account;
when the type code is a first type code, determining that the account code corresponding to the transaction account is a combination of the type code and an account ID of the transaction account;
when the type code is a second type code, determining that the account code corresponding to the transaction account is the type code.

4. The method according to claim 1, wherein the obtaining a standard route code corresponding to the fund transaction identifier comprises:
obtaining a transaction code corresponding to the fund transaction identifier;
obtaining a standard route code corresponding to the transaction code.

5. The method according to claim 1, wherein
the fund transaction identifier is a transaction serial number.

6. An apparatus for detecting a fund transaction route in an electronic payment process, wherein the apparatus comprises:
a code generation unit that generates an actual route code for a fund transaction based on a fund transaction identifier, the actual route code being used to represent an actual transaction route of fund in the fund transaction;
a standard obtaining unit that obtains a standard route code corresponding to the fund transaction identifier;
a route confirmation unit that confirms correctness of the transaction route of the fund transaction when the actual route code is identical to the standard route code.

7. The apparatus according to claim 6, wherein the code generation unit comprises:
a first obtaining subunit that obtains actual transaction information of fund in the fund transaction process from a corresponding database based on the fund transaction identifier, the actual transaction information including: transaction accounts and a transaction sequence;
a second obtaining subunit that obtains account codes corresponding to the transaction accounts;
a code generation subunit that combines account codes of transaction accounts based on the transaction sequence to generate the actual route code.

8. The apparatus according to claim 7, wherein
the second obtaining subunit obtains a type code of a transaction account; when the type code is a first type code, determines that the account code corresponding to the transaction account is a combination of the type code and an account ID of the transaction account; when the type code is a second type code, determines that the account code corresponding to the transaction account is the type code.

9. The apparatus according to claim 6, wherein
the standard obtaining unit obtains a transaction code corresponding to the fund transaction identifier and obtains a standard route code corresponding to the transaction code.

10. The apparatus according to claim 6, wherein
the fund transaction identifier is a transaction serial number.
